# EUROPEAN PATENT APPLICATION

(11) **EP 4 549 327 A1**
(43) Date of publication of application: **07.05.2025**
(21) Application number: 23207532.5
(22) Date of filing: 02.11.2023
(51) Int. Cl.: B65B 5/04, C09J 7/38, C09J 7/35, C09J 7/10

(54) **PROTECTIVE COATING FOR HOT-MELT PRESSURE SENSITIVE ADHESIVES**

(71) Applicant: Sika Technology AG, 6340 Baar (CH)
(72) Inventor: HAUSER, Leonardo, 06020-060 Osasco, São Paulo (BR); ITO, Fernanda, 13236-385 São Paulo (BR)
(74) Representative: Sika Patent Attorneys

(57) **Abstract**

The invention is directed to a packaged adhesive composition comprising a piece of a hot-melt adhesive and a protective coating comprising at least one polymer P and covering at least a portion of an outer surface of the piece of the hot-melt adhesive, wherein the protective coating is obtained by using an aqueous polymeric dispersion comprising an aqueous dispersion of at least one polymer P.

## Description

### Technical field

The invention relates to protective coatings for hot-melt adhesive compositions, particularly for hot-melt pressure sensitive adhesive compositions, and to methods for producing adhesive articles.

### Background of the invention

Pressure sensitive adhesives (PSA) are viscoelastic materials, which adhere immediately to almost any kind of substrates by application of light pressure and which are permanently tacky. Pressure sensitive adhesives that are applied as a melt, also known as hot-melt pressure sensitive adhesives (HM-PSA), have the advantage of having an infinitely long open time, which makes them suitable for bonding of large surfaces with thin adhesive films. Due to the permanent tackiness of pressure sensitive adhesives, surface of an adhesive article must be protected with a non-tacky layer of material to avoid bonding to undesired substrates and to protect the adhesive material from fouling before application, particularly during transportation. Furthermore, moisture curable hot-melt adhesives, such as those containing polymers with moisture reactive functional groups, particularly silane or isocyanate groups, should be protected moisture to avoid premature curing of the adhesive material.

Reactive hot-melt adhesives are typically packaged in moisture proof containers such as steel drums, tin cans, or aluminum bags. Non-reactive adhesives do not need to be protected from moisture and they are commonly stored and transported in fibre drums or boxes having an inner wall lined with an anti-tack layer, such as silicon-based coating or Kraft paper. Non-reactive adhesives can also be provided in form of adhesive "pillows" comprising a thin layer of thermoplastic film covering the outer surface of the adhesive article.

The above discussed solutions of prior art have been found out to have several disadvantages. Generally, the package used to protect the adhesive product during transportation and storage must be removed before use of adhesive resulting in significant amount of waste that must be recycled or demolished. The use of a siliconized coating on the inner surface of the package increases the complexity and costs of the recycling process. Providing the adhesive product in form of pillows has the advantage of reducing the amount of waste but the process for transforming an adhesive mass to an adhesive pillow coating with a thermoplastic film is quite complex and requires the use of specialized equipment.

There is thus a need for a new type of packaging solution for non-reactive hot-melt pressure sensitive adhesives having decreased complexity and costs of use compared to the packaging solutions of prior art

### Summary of the invention

The objective of the present invention is to provide a packaged adhesive composition that overcomes or at least mitigates the disadvantages of the prior art packaging solutions.

Surprisingly, it has been found out that the object can be achieved with the features of claim 1.

Specifically, according to the invention, a packaged adhesive composition is proposed, the composition comprising a piece of a hot-melt adhesive and a protective coating comprising at least one polymer **P** and covering at least a portion of an outer surface of the piece of the hot-melt adhesive, wherein the protective coating is obtained by using an aqueous polymeric dispersion comprising an aqueous dispersion of the at least one polymer **P.**

As it turned out, the new type of protective coating is easy to apply to a hot-melt adhesive and it is not sticky enabling easy handling of the packaged adhesive article. The suggested packaging solution thus enables providing adhesive articles using a simplified process and reduced costs.

Additional aspects of the present invention are presented in further independent claims. Preferred embodiments of the invention are outlined throughout the description and the dependent claims.

### Detailed description of the invention

The subject of the present invention is a packaged adhesive composition comprising a piece of a hot-melt adhesive and a protective coating comprising at least one polymer **P** and covering at least a portion of an outer surface of the piece of the hot-melt adhesive, wherein the protective coating is obtained by using an aqueous polymeric dispersion comprising an aqueous dispersion of the at least one polymer **P.**

The prefix "poly" in substance designations such as "polyol" or "polyisocyanate" refers to substances which in formal terms contain two or more per molecule of the functional group that occurs in their designation. A polyol, for example, is a compound having two or more hydroxyl groups, and a polyisocyanate is a compound having two or more isocyanate groups.

The term "polymer" designates a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "molecular weight" refers to the molar mass (g/mol) of a molecule or a part of a molecule, also referred to as "moiety". The term "average molecular weight" refers to number average molecular weight (Mₙ) or weight average molecular weight (M_{w}) of an oligomeric or polymeric mixture of molecules or moieties. The molecular weight can be determined by conventional methods, preferably by gel permeation-chromatography (GPC) using polystyrene as standard, styrene-divinylbenzene gel with porosity of 100 Angstrom, 1000 Angstrom and 10000 Angstrom as the column and depending on the molecule, tetrahydrofurane as a solvent, at 35°C, or 1 ,2,4-trichlorobenzene as a solvent, at 160°C.

The term "softening point" or "softening temperature" refers to a temperature at which compound softens in a rubber-like state, or a temperature at which the crystalline portion within the compound melts. The softening point can be measured by a Ring and Ball method according to DIN EN 1238:2011 standard.

The term "glass transition temperature" (T_{g}) refers to the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1 %.

The "amount or content of at least one component X" in a composition, for example "the amount of at least one polymer P" refers to the sum of the individual amounts of all polymers P contained in the composition. For example, in case the composition comprises 20 wt.-% of the at least one polymer P, the sum of the amounts of all polymers P contained in the composition equals 20 wt.-%.

The hot-melt adhesive is preferably a pressure sensitive hot-melt adhesive.

In one or more embodiments, the hot-melt adhesive comprises at least one styrene block copolymer **SC.**

Suitable styrene block copolymers **SC** include, particularly, block copolymers containing polystyrene and polybutadiene blocks and/or polyisoprene blocks. These materials are generally available as pure triblock copolymers, also known as SIS and SBS block copolymers, and as diblock copolymers (SI and SB block copolymers). Furthermore, styrene block copolymers are also commercially available as mixtures of diblock and triblock copolymers. Suitable styrene block copolymers can have a linear, radial, or star structure, the linear structure being especially preferred.

According to one or more embodiments, the at least one styrene block copolymer **SC** comprises at least one styrene isoprene diblock (SI) and/or triblock (SIS) copolymer and/or at least one styrene-butadiene diblock (SB) and/or triblock (SBS) copolymer.

Suitable SI, SIS, SB, and SBS block copolymers are commercially available, for example from TSRC/Dexco under the trade name of Vector^{®}, such as Vector^{®} 4000-series, and from Kraton Polymers under the trade name of Kraton^{®} D-series.

Preferably, the hot-melt adhesive has a Ring & Ball softening point determined by using the method defined in DIN EN 1238:2011 standard of at least 50 °C, more preferably at least 75 °C, even more preferably at least 85 °C and/or at or below 200 °C, more preferably at or below 175 °C, even more preferably at or below 150 °C.

In one or more embodiments, the hot-melt adhesive further comprises at least one tackifying resin **TR.**

The term "tackifying resin" designates in the present document resins that in general enhance the adhesion and/or tackiness of an adhesive composition. The term "tackiness" designates in the present document the property of a substance of being sticky or adhesive by simple contact. The tackiness can be measured, for example, as a loop tack. Preferred tackifying resins are tackifying at a temperature of 25°C

Examples of suitable tackifying resins include natural resins, synthetic resins and chemically modified natural resins.

Examples of suitable natural resins and chemically modified natural resins include rosins, rosin esters, phenolic modified rosin esters, and terpene resins. The term "rosin" is to be understood to include gum rosin, wood rosin, tall oil rosin, distilled rosin, and modified rosins, for example dimerized, hydrogenated, maleated and/or polymerized versions of any of these rosins.

Suitable terpene resins include copolymers and terpolymers of natural terpenes, such as styrene/terpene and alpha methyl styrene/terpene resins; polyterpene resins generally resulting from the polymerization of terpene hydrocarbons, such as the bicyclic monoterpene known as pinene, in the presence of Friedel-Crafts catalysts at moderately low temperatures; hydrogenated polyterpene resins; and phenolic modified terpene resins including hydrogenated derivatives thereof.

The term "synthetic resin" refers to compounds obtained from the controlled chemical reactions such as polyaddition or polycondensation between well-defined reactants that do not themselves have the characteristic of resins.

Monomers that may be polymerized to synthesize the synthetic resins may include aliphatic monomer, cycloaliphatic monomer, aromatic monomer, or mixtures thereof. Aliphatic monomers can include C₄, Cs, and C₆ paraffins, olefins, and conjugated diolefins. Examples of aliphatic monomer or cycloaliphatic monomer include butadiene, isobutylene, 1,3-pentadiene, 1,4-pentadiene, cyclopentane, 1-pentene, 2-pentene, 2- methyl-1-pentene, 2-methyl-2-butene, 2-methyl-2-pentene, isoprene, cyclohexane, 1- 3-hexadiene, 1-4-hexadiene, cyclopentadiene, dicyclopentadiene, and terpenes. Aromatic monomer can include Cs, C₉, and C₁₀ aromatic monomer. Examples of aromatic monomer include styrene, indene, derivatives of styrene, derivatives of indene, coumarone and combinations thereof.

Particularly suitable synthetic resins include synthetic resins made by polymerizing mixtures of unsaturated monomers that are obtained as by-products of cracking of natural gas liquids, gas oil, or petroleum naphthas. Such synthetic resins obtained from petroleum-based feedstocks are also characterized as "petroleum resins" or "hydrocarbon resins". These include also pure monomer aromatic resins, which are made by polymerizing aromatic monomer feedstocks that have been purified to eliminate color causing contaminants and to precisely control the composition of the product. Tackifying hydrocarbon resins typically have a relatively low average molecular weight (Mₙ), such in the range of 250 - 5000 g/mol and a glass transition temperature of above 0°C, preferably equal to or higher than 15°C, more preferably equal to or higher than 30°C.

Examples of suitable hydrocarbon resins for use as the tackifying resin **TR** include, for example, C5 aliphatic hydrocarbon resins, mixed C5/C9 aliphatic/aromatic hydrocarbon resins, aromatic modified C5 aliphatic hydrocarbon resins, cycloaliphatic hydrocarbon resins, mixed C5 aliphatic/cycloaliphatic hydrocarbon resins, mixed C9 aromatic/cycloaliphatic hydrocarbon resins, mixed C5 aliphatic/cycloaliphatic/C9 aromatic hydrocarbon resins, aromatic modified cycloaliphatic hydrocarbon resins, C9 aromatic hydrocarbon resins, polyterpene resins, and copolymers and terpolymers of natural terpenes as well hydrogenated versions of the aforementioned hydrocarbon resins. The notations "C5" and "C9" indicate that the monomers from which the resins are made are predominantly hydrocarbons having 4-6 and 8-10 carbon atoms, respectively. The term "hydrogenated" includes fully, substantially, and at least partially hydrogenated resins. Partially hydrogenated resins may have a hydrogenation level, for example, of 50%, 70%, or 90%.

Preferably, the at least one tackifying resin **TR** is a non-functionalized tackifying resin. The term "non-functionalized tackifying resin" designates tackifying resins which are not chemically modified so as to contain functional groups such as epoxy, silane, sulfonate, amide, or anhydride groups.

According to one or more embodiments, the at least one tackifying resin **TR** has:
- a softening point measured by a Ring and Ball method according to DIN EN 1238:2011 standard in the range of 65 - 175 °C, preferably 70 - 145 °C, more preferably 75 - 115 °C, even more preferably 80 - 125 °C and/or
- a number average molecular weight (Mₙ) in the range of 150 - 5000 g/mol, preferably 250 - 3500 g/mol, more preferably 250 - 3000 g/mol, even more preferably 250 - 2500 g/mol and/or
- a glass transition temperature (T_{g}) determined by dynamical mechanical analysis (DMA) as the peak of the measured loss modulus (G") curve using an applied frequency of 1 Hz and a strain level of 0.1% of at or above 0 °C, preferably at or above 10 °C, more preferably at or above 15 °C, even more preferably at or above 20 °C.

Suitable hydrocarbon resins are commercially available, for example, under the trade name of Wingtack^{®} series, Wingtack^{®} Plus, Wingtack^{®} Extra, and Wingtack^{®} STS (all from Cray Valley); under the trade name of Escorez^{®} 1000 series, Escorez^{®} 2000 series, and Escorez^{®} 5000 series (all from Exxon Mobile Chemical); under the trade name of Novares^{®} T series, Novares^{®} TT series, Novares^{®} TD series, Novares^{®} TL series, Novares^{®} TN series, Novares^{®} TK series, and Novares^{®} TV series (all from RÜTGERS Novares GmbH); under the trade name of Kristalex^{®}, Plastolyn^{®}, Piccotex^{®}, Piccotac^{®}, Piccolastic^{®} and Endex^{®} (all from Eastman Chemicals); and under the trade name of Unilene (from Braskem).

The protective coating of the packaged adhesive composition comprises at least one polymer **P,** wherein coating is obtained by using an aqueous polymeric dispersion comprising an aqeous polymer dispersion of the at least one polymer **P.**

The term "dispersion" refers in the present disclosure to a physical state of matter that includes at least two distinct phases, wherein a first phase is distributed in a second phase, with the second phase being a continuous medium. Preferably, the dispersion comprises a solid phase which is dispersed as solid particles in a continuous liquid phase. Consequently, the term "polymeric dispersion" refers to a composition comprising a continuous liquid phase and solid particles of one or more polymers dispersed in the liquid phase. The term "aqueous polymeric dispersion" refers to a dispersion having water as the main carrier. Preferably, the term "aqueous" refers to a 100 % water carrier.

Aqueous dispersions of polymers can be prepared by polymerization, such as free-radical polymerization, using substance, solution, suspension, or emulsion polymerization techniques, which are well known to the skilled person.

Alternatively, an aqueous polymer dispersion can be prepared by using commercially available aqueous polymer dispersions and/or re-dispersible polymer powders, which can be mixed with water and/or with aqueous polymer dispersions to obtain the aqueous polymer dispersion. Furthermore, aqueous polymer dispersions can be diluted with addition water to adjust the solids content. The term "re-dispersible polymer powder" refers to a dried residue of an aqueous polymer dispersion, said dispersion being a mixture of at least one water-insoluble film-forming polymer. Re-dispersible polymer powders are generally produced by spray-drying techniques of water-based dispersions containing, for example, polymers based on vinyl esters, such as vinyl acetate, vinyl chloride, (meth)acrylate monomers, styrene, butadiene, and ethylene. Re-dispersible polymer powders may further comprise one or more compounds selected from colloidal stabilizers and antiblocking agents. Examples of re-dispersible polymer powders and methods for producing thereof are disclosed, for example, in patent application US 2005/0014881 A1.

Preferably, the at least one polymer **P** in aqueous dispersion has a minimum film-forming temperature determined using the method defined in ISO 2115:1996 standard of at or below 35 °C, more preferably at or below 20 °C, even more preferably at or below 15 °C, still more preferably at or below 10 °C. Such aqueous polymer dispersions have turned out to be especially suitable for obtaining the protective coating for the packaged adhesive composition.

Particularly, the at least one polymer **P** has a glass transition temperature determined by differential scanning calorimetry (DSC) measurement conducted according to ISO 11357 standard of at or above -5 °C, preferably at or above 0 °C, more preferably at or above 5 °C.

According to one or more embodiments, the aqueous polymer dispersion of the at least one polymer **P** has a solids content in the range of 25 - 90 wt.-%, preferably 35 - 85 wt.-%, more preferably 40 - 80 wt.-%, even more preferably 40 - 75 wt.-%. The term "solids content" refers in the context of a polymer dispersion to the portion of the dispersion, which when heated to a temperature of 105° C for one hour at one atmosphere pressure does not volatilize. Solids content of an aqueous polymer dispersion can be determined by using the EPA Test Method 24 ("Determination of volatile matter content, water content, density, volume solids, and weight solids of surface coatings", 2017).

Preferred polymers for the at least one polymer **P** include copolymers of (meth)acrylate and styrene, copolymers of (meth)acrylate, styrene, and butadiene, copolymers of (meth)acrylate and acrylonitrile, copolymers of styrene and butadiene, copolymers of (meth)acrylic acid and styrene, copolymers of vinyl acetate, ethylene, and (meth)acrylate, copolymers of vinyl acetate, ethylene, and vinyl ester, copolymers of vinyl chloride, ethylene, and vinyl laureate, copolymers of vinyl acetate and vinyl versatate, and polyurethane polymers.

The term "polyurethane polymer" refers in the present disclosure to polymers prepared by so called diisocyanate polyaddition process, including those polymers which are almost or completely free of urethane groups. Examples of polyurethane polymers are polyether polyurethanes, polyester polyurethanes, polyether polyureas, polyureas, polyester polyureas, polyisocyanurates, and polycarbodiimides.

In one or more embodiments, the at least one polymer **P** is selected from copolymers of (meth)acrylate and styrene, copolymers of (meth)acrylate, styrene, and butadiene, copolymers of styrene and butadiene, copolymers of (meth)acrylic acid and styrene, and polyurethane polymers, preferably from copolymers of (meth)acrylate and styrene, copolymers of (meth)acrylate, styrene, and butadiene, and copolymers of (meth)acrylic acid and styrene.

In one or more embodiments, the aqueous polymer dispersion of the at least one polymer **P** is an aqueous hybrid dispersion of at least one first polymer **P1** and at least one second polymer **P2.** Such hybrid dispersions can be obtained by preparing a first aqueous polymer dispersion of the at least one first polymer **P1** followed by polymerizing monomers of the at least one second polymer **P2** in the first aqueous polymer dispersion of the at least one first polymer **P1,** for example, by using a core-shell emulsion polymerization techniques. In core-shell emulsion polymerization, the particles of the at least one first polymer **P1** are used as seed particles and the monomers of the at least one second polymer **P2** are then polymerized within the particles of the at least one first polymer **P1.** Other types of morphologies than core-shell, such as embedded sphere morphologies, are also suitable and can be obtained by using different techniques.

Suitable aqueous polymer dispersions are commercially available, for example, from BASF under the trade names of Joncryl^{®} (from BASF), Acronal^{®}, and Butonal^{®}; from Lubrizol under the trade name of Carboset^{®}; from Synthomer (UK) Limited under the trade names of Lipaton^{®} and Plextol^{®}; from Celanese under the trade name of Mowilith^{®}; from Airproducts under the trade name of Airflex^{®}; from Arkema under the trade name of Encor^{®}; from Wacker Chemie under the trade name of Vinnapas^{®}; and from Dow Chemicals under the trade name of Primal^{®}.

In one or more embodiments, the aqueous polymeric dispersion further comprises at least one coalescent **C**, preferably an aliphatic or aromatic polyether, preferably containing between 4 and 12 carbon atoms.

Such coalescent can be added to the aqueous polymeric dispersion to adjust, for example to lower, the minimum film-forming temperature of the at least one polymer **P** in aqueous dispersion.

The coalescing agent **C** is preferably selected from dipropylene glycol monomethyl ether, butyldiglycol, dipropylene glycol dimethyl ether, dipropylene glycol diethyl ether, dipropylene glycol n-butyl ether, dipropylene glycol dibutyl ether, dipropylene glycol dipropyl ether, ethylene glycol phenyl ether, propylene glycol phenyl ether, and 2,5,7,10-tetraoxaundecane.

Preferred type and amount of the coalescent **C** depends on the type of the aqueous dispersion of the at least one polymer **P** used for providing the aqueous polymeric dispersion and on the desired effect on the minimum film-forming temperature.

It may, for example, that the proportion of the coalescent **C**, if used, is at least 0.1 wt.-%, preferably at least 0.5 wt.-%, such as 0.5 - 35 wt.-%, particularly 1.5 - 30 wt.-%, preferably 1.5 - 25 wt.-%, based on the total weight of the polymer **P** in the aqueous polymeric dispersion.

The aqueous polymeric dispersion can further contain various additives, including surfactants, biocides, defoamer, and rheological aids.

In one or more embodiments, the packaged adhesive composition is an adhesive pillow, cylinder, block, cartridge, or a chub, preferably an adhesive pillow.

In one or more embodiments, the protective coating has a coating weight of 10 - 500 g/m², preferably 25 - 350 g/m². Such coating weights have been found suitable for providing sufficient protection for the hot-melt adhesive without having any or insignificant negative effect on the properties of the adhesive while simultaneously having acceptably low impact on the production costs of the packaged adhesive composition.

Preferably, the protective coating is obtained by a process comprising applying the aqueous polymeric comprising an aqueous dispersion of the at least one polymer **P** to the outer surface of the piece of the hot-melt adhesive to form a wet film and allowing at least a portion, preferably a significant portion of the water contained in said wet film to evaporate.

The preferences given above for the hot-melt adhesive, the at least one polymer **P**, the aqueous polymeric dispersion, the at least one styrene block copolymer **SC**, and the at least one coalescent **C** apply equally to all other aspects of the present invention unless stated otherwise.

Another aspect of the present invention is a method for producing a packaged adhesive, the method comprising steps of:
i. Providing a piece of a hot-melt adhesive,
ii. Applying an aqueous polymeric dispersion comprising an aqueous dispersion of at least one polymer **P** to an outer surface of the piece of the hot-melt adhesive to form a wet film of the aqueous polymeric dispersion, and
iii. Allowing at least a portion of the water contained in said wet film to evaporate.

In one more embodiments, step ii. of the method comprises:
- dipping the piece of the hot-melt adhesive into the aqueous polymeric dispersion or
- applying the aqueous polymeric dispersion to an outer surface of the piece of the hot-melt adhesive by using a paint roller or
- spraying the aqueous polymeric dispersion to an outer surface of the piece of the hot-melt adhesive.

Preferably, the hot-melt adhesive is a pressure sensitive hot-melt adhesive, preferably comprising at least one styrene block copolymer **SC** and/or having a Ring & Ball softening point determined by using the method defined in DIN EN 1238:2011 standard of at least 50 °C, more preferably at least 75 °C, even more preferably at least 85 °C and/or at or below 200 °C, more preferably at or below 175 °C, even more preferably at or below 150 °C.

Preferred embodiments of the at least one styrene block copolymer **SC** and the at least one polymer **P** have already been discussed above.

In one or more embodiments, the aqueous polymeric dispersion comprising an aqueous dispersion of the at least one polymer **P** further comprises at least one coalescent **C,** preferably an aliphatic or aromatic polyether, preferably containing between 4 and 12 carbon atoms.

The coalescing agent **C** is preferably selected from dipropylene glycol monomethyl ether, dipropylene glycol dimethyl ether, dipropylene glycol diethyl ether, dipropylene glycol n-butyl ether, dipropylene glycol dibutyl ether, dipropylene glycol dipropyl ether, ethylene glycol phenyl ether, propylene glycol phenyl ether, and 2,5,7,10-tetraoxaundecane.

Preferably, the aqueous polymeric dispersion comprises 0.5 - 20 wt.-%, preferably 1.5 - 15 wt.-%, more preferably 1.5 - 12.5 wt.-%, based on the total weight of the aqueous polymeric dispersion, of the at least one coalescent **C.**

In one or more embodiments, the packaged adhesive composition is an adhesive pillow, cylinder, block, cartridge, or a chub, preferably an adhesive pillow.

### Examples

The followings compounds and products shown in Table 1 were used in the examples.

**Table 1**

| | | |
|---|---|---|
| Aqueous dispersion of polymer **P1** | Aqueous dispersion of styrene-butadiene copolymer, solids content 70-80 wt.-%, T_{g} of polymer < -50 °C | BASF |
| Aqueous dispersion of polymer **P2** | Acrylic polymer emulsion, solids content 40-50 wt.-%, MFFT < 5 °C, T_{g} of polymer 5-10 °C | BASF |
| Aqueous dispersion of polymer **P3** | Aqueous dispersion of styrene-acrylic copolymer free of ethoxylated alkyl phenol, solids content 40-50 wt.-%, MFFT 10 °C | BASF |
| Aqueous dispersion of polymer **P4** | Acrylic copolymer emulsion, 40-50 wt.-%, MFFT 35 °C | Lubrizol |
| Aqueous dispersion of polymer **P5** | Acrylic copolymer emulsion, solids content 50-55 wt.-%, MFFT 10 °C, T_{g} of polymer 10-15 °C | Lubrizol |
| Aqueous dispersion of polymer **P6** | Aqueous dispersion of styrene-acrylic copolymer, solids content 45-55 wt.-%, T_{g} of polymer 25-35 °C | BASF |
| Coalescent **C1** | Dipropylene glycol n-butyl ether, molecular weight 190 g/mol | Dow |
| Coalescent **C2** | Propylene glycol phenyl ether, molecular weight 152 g/mol | Dow |

The constituents of the tested coating compositions comprising an aqueous dispersion of polymer P are shown in Table 2. The results of the film forming test are also shown in Table 2.

**Table 2**

| **Composition [wt.-%]** | **Ref-1** | **Ex-1** | **Ex-2** | **Ex-3** | **Ex-4** | **Ex-5** | **Ex-6** | **Ex-7** |
|---|---|---|---|---|---|---|---|---|
| Aqueous dispersion of polymer P1 | 100 | | | | | | | |
| Aqueous dispersion of polymer P2 | | 100 | | | | | | |
| Aqueous dispersion of polymer P3 | | | 100 | | | | | |
| Aqueous dispersion of polymer P4 | | | | 91 | 60.3 | 91 | | |
| Aqueous dispersion of polymer P5 | | | | | | | 97 | |
| Aqueous dispersion of polymer P6 | | | | | | | | 100 |
| Coalescent C1 | | | | 9 | 5.4 | 4.5 | 3 | |
| Coalescent C2 | | | | | | 4.5 | | |
| Water as diluent | | | | | 34.3 | | | |
| **Total** | | | | 100 | 100 | 100 | 100 | |

| **Measured properties** | | | | | | | | |
|---|---|---|---|---|---|---|---|---|
| Film forming | Not good | Good | Good | Good | Good | Good | Good | Good |

### Film forming properties

The film forming properties of the aqueous polymeric dispersions were tested by applying the aqueous dispersion as a thin film and by observing if a continuous film was formed and if the film would crack after some time. The color of the film was also observed (clear or whitish) as well as the surface stickiness of the film.

In case a continuous film could be easily formed and no cracks were observed, the film forming properties of the tested composition were recorded as "good".

### Preparation of packaged adhesive compositions

Pieces of hot-melt pressure sensitive adhesive compositions were coated with the tested coating composition of inventive example Ex-1. The coating composition was sprayed using a spray gun. Three layers were applied with a 20-minute gap between each one application resulting in a final coating weight of 32 g/m².

Two commercially available HM-PSAs were used for preparation of packaged adhesive compositions:
1) SikaMelt^{®}-202 having a softening point of 60 - 65 °C
2) SikaMelt^{®}-285 having a softening point of above 120 - 130 °C

### Test methods

The packaged adhesive compositions were characterized using the following methods. Th results of the test are shown in Table 3.

### Stacking behavior

In stacking behavior test, the packaged adhesive compositions were exposed to transport conditions in order to evaluate the suitability of the tested protective coating. The test specimens each having a weight of 1 kg were stacked in an oven having a temperature 40 °C (each pile contained four superimposed specimens). After couple of hours of treatment in the oven, the behavior of the protective coatings was visually assessed. In case the stacked specimens could be removed from each other, the stacking behavior of the tested composition was recorded as "good".

### Transportation stability

In the test for transportation stability, the test specimens each having a weight of 1 kg were stacked in piles in compartments of a carton box. The maximum temperature during transportation cycle reached 40 °C. After the transportation, the condition of the protective coatings was visual assessed. In case the test specimens did not stick to surface of the carton box and no breaks were found in the protective coating, the transportation stability of the tested composition was recorded as "good".

**Table 3**

| **Test** | **HM-PSA 1** | **HM-PSA 2** |
|---|---|---|
| Stacking behavior | Not good | Good |
| Transportation stability | Not good | Good |

## Claims

1. A packaged adhesive composition comprising a piece of a hot-melt adhesive and a protective coating comprising at least one polymer **P** and covering at least a portion of an outer surface of the piece of the hot-melt adhesive, wherein the protective coating is obtained by using an aqueous polymeric dispersion comprising an aqueous dispersion of the at least one polymer **P.**

2. The packaged adhesive composition according to claim 1, wherein the hot-melt adhesive is a pressure sensitive hot-melt adhesive, preferably comprising at least one styrene block copolymer **SC**.

3. The packaged adhesive composition according to claim 1 or 2, wherein the hot-melt adhesive has a Ring & Ball softening point determined by using the method defined in DIN EN 1238:2011 standard of at least 50 °C, preferably at least 75 °C.

4. The packaged adhesive composition according to any one of previous claims, wherein the at least one polymer **P** in aqueous dispersion has a minimum film-forming temperature determined using the method defined in ISO 2115 standard of at or below 15 °C, preferably at or below 10 °C.

5. The packaged adhesive composition according to any one of previous claims, wherein the at least one polymer **P** has a glass transition temperature determined by differential scanning calorimetry (DSC) measurement conducted according to ISO 11357 standard of at or above 0 °C, preferably at or above 5 °C.

6. The packaged adhesive composition according to any one of previous claims, wherein the at least one polymer **P** is selected from copolymers of (meth)acrylate and styrene, copolymers of (meth)acrylate, styrene, and butadiene, copolymers of (meth)acrylate and acrylonitrile, copolymers of styrene and butadiene, copolymers of (meth)acrylic acid and styrene, copolymers of vinyl acetate, ethylene, and (meth)acrylate, copolymers of vinyl acetate, ethylene, and vinyl ester, copolymers of vinyl chloride, ethylene, and vinyl laureate, copolymers of vinyl acetate and vinyl versatate, and polyurethane polymers.

7. The packaged adhesive composition according to any one of previous claims, wherein the aqueous polymeric dispersion further comprises at least one coalescent **C,** preferably an aliphatic or aromatic polyether, preferably containing between 4 and 12 carbon atoms.

8. The packaged adhesive composition according to claim 7, wherein the coalescing agent **C** is selected from dipropylene glycol monomethyl ether, dipropylene glycol dimethyl ether, dipropylene glycol diethyl ether, dipropylene glycol n-butyl ether, dipropylene glycol dibutyl ether, dipropylene glycol dipropyl ether, ethylene glycol phenyl ether, propylene glycol phenyl ether, and 2,5,7,10-tetraoxaundecane.

9. The packaged adhesive composition according to any one of previous claims, wherein the packaged adhesive composition is an adhesive pillow, cylinder, block, cartridge, or a chub.

10. The packaged adhesive composition according to any one of previous claims, wherein the protective coating has a coating weight of 10 - 500 g/m², preferably 25 - 350 g/m².

11. A method for producing a packaged adhesive comprising steps of:
i. Providing a piece of a hot-melt adhesive,
ii. Applying an aqueous polymeric dispersion comprising an aqueous dispersion of at least one polymer **P** to an outer surface of the piece of the hot-melt adhesive to form a wet film of the aqueous polymeric dispersion, and
iii. Allowing at least a portion of the water contained in said wet film to evaporate.

12. The method according to claim 11, wherein step ii. of the method comprises:
- dipping the piece of the hot-melt adhesive into the aqueous polymeric dispersion or
- applying the aqueous polymeric dispersion to the outer surface of the piece of the hot-melt adhesive by using a paint roller or
- spraying the aqueous polymeric dispersion to the outer surface of the piece of the hot-melt adhesive.

13. The method according to claim 11 or 12, wherein the hot-melt adhesive is a pressure sensitive hot-melt adhesive, preferably comprising at least one styrene block copolymer **SC** and/or preferably having a Ring & Ball softening point determined by using the method defined in DIN EN 1238:2011 standard of at least 50 °C, preferably at least 75 °C.

14. The method according to any one of claims 11-13, wherein the at least one polymer **P** in aqueous dispersion has a minimum film-forming temperature determined using the method defined in ISO 2115 standard of at or below 15 °C, preferably at or below 10 °C.

15. The method according to any one of claims 11-14, wherein the at least one polymer **P** has a glass transition temperature determined by differential scanning calorimetry (DSC) measurement conducted according to ISO 11357 standard of at or above 0 °C, preferably at or above 5 °C.

16. The method according to any one of claims 11-15, wherein the aqueous polymeric dispersion further comprises at least one coalescent **C,** preferably an aliphatic or aromatic polyether, preferably containing between 4 and 12 carbon atoms.
